# EUROPEAN PATENT SPECIFICATION

(11) **EP 0 638 736 B1**
(45) Date of publication and mention of the grant of the patent: **16.07.1997**
(21) Application number: 93112712.0
(22) Date of filing: 09.08.1993
(51) Int. Cl.: F16C 33/14, C22C 21/00, C22C 9/00, C22C 45/00, C22F 1/00

(54) **A plain bearing mounted in a machine and method of its age-hardening**
In einer Maschine angeordnetes Gleitlager und Verfahren zur Aushärtung
Palier lisse monté dans une machine et procédé de durcissement par vieillissement

(43) Date of publication of application: 15.02.1995
(73) Proprietor: GLYCO-METALL-WERKE Glyco B.V. & Co. KG, D-65091 Wiesbaden-Schierstein (DE)
(72) Inventor: Abis, Sergio, Dr., I-28100 Novara NO (IT)

(56) References cited:
- WO-A-89/02365
- WO-A-90/01567
- DE-A- 2 043 676
- US-A- 4 555 186

## Description

The invention relates to a finished plain bearing mounted in a machine, particularly an internal combustion engine. The invention also relates to a method for the age-hardening of bearing alloys of plain bearings in which the bearing alloy is to be subjected to heat treatment.

In DE-A-2043676 a method for the production of bimetal bearings is described. The bearing material, that can be treated as stripes or half-finished products, is heated up to a temperature between 480 and 525°C in a lead bath. After that the stripe is quenched very quickly in order to maintain the supersaturated condition. After quenching a heat treatment at 175°C over 10h is performed to get a certain hardness and then the bearing is formed. Therefore, the finished product is already age-hardened when it is mounted in the machine.

An amorphous laminated material for sliding elements is desribed in WO 89/02365. The production of the laminated material is effected by coating a melt of the alloy and by quenching the foil strip at cooling rates between 10⁶ K/s and 10⁹ K/s. The material of the sliding layer is frozen in the amorphous state. As laminated material is only a half-finished product it has to be treated and machined by further operational steps.

None of the prior art publications describes a finished plain bearing which is not age-hardened.

Finished plain bearings which are mounted in machines, particularly internal combustion engines of motor cars, must meet various requirements.

On the one hand a plain bearing must have a certain strength to be able to withstand, without damage, alternating loading in operation, and on the other hand the bearing alloy must also be sufficiently soft to embed foreign particles, which is important particularly during the running-in of the engine. It is also important for the bearing alloy to be able to adapt during running-in to the component in sliding contact therewith, e.g. a crankshaft, without this resulting in damage to the bearing material already at the beginning of the operation of the machine.

In order to fulfil these various tasks, age-hardening bearing alloys which have the desired strength have been provided with a running-in layer of soft material, e.g. tin. This running-in layer is to a large extent abraded during the operation of the machine so that the bearing alloy, which is situated below it and has the correponding strength values, is exposed and this layer is satisfactory for the requirements on continuous operation and consequently on alternating loading.

In the field of age-hardening of aluminium bearing alloys two methods are known, namely natural age-hardening and hot age-hardening, the hot age-hardening, which takes place at temperatures between 120 and 180°C, ensures, in comparison with natural age-hardening, a faster increase of mechanical properties and mostly also higher maximum values (see Aluminiumtaschenbuch, ed. 14, page 134). In order to obtain the maximal strength hours to days are needed, depending on the aging temperature and on the bearing alloy in question, which requires from the bearing manufacturer a correspondingly large expense.

The application of a running-in layer represents an additional operational step which also makes the manufacture more expensive.

The aim of the invention is therefore to devise a finished plain bearing mounted in a machine, particularly internal combustion engine, which is at the beginning of the running-in sufficiently soft to adapt to the operational parameters and which has during later operation sufficient strength and hardness to withstand, after running-in, the changed operational conditions, such as alternating loading.

This aim is achieved by a plain bearing according to claim 1 mounted in a machine, particularly an internal combustion engine.

Features of the method for age-hardening are claimed in claim 4. Preferred embodiments are subject of the subsidiary claims.

A plain bearing material in the form of a supersaturated solid solution or naturally aged material is soft, compared to age-hardened plain bearing material, so that such material meets the requirements for running-in conditions.

Due to the temperatures, generated in operation of the machine by friction between the plain bearing and the component in sliding contact therewith, which are produced e.g. in motor car engines at rotational frequencies of up to 7000 revolutions per minute create in the engine conditions which result in age-hardening of the bearing alloy.

Because at the beginning of the operation the bearing alloy is soft, and during the operation of the machine gradually hardens, the bearing alloy adapts itself spontaneously to the relevant operational conditions. Additional heat treatment and provision of a running-in layer is therefore not necessary.

In order to achieve that the material is still sufficiently soft during the running-in phase, the hardness of the supersaturated solid solution or naturally aged alloy should preferably be below 10 % of the difference between the maximum achievable hardness obtained during operation and the quench value. During operation the hardness then continuously increases to the maximum value and remains substantially at this value, it being assumed that the life of the machine is shorter than the period after which bearing alloys may possibly experience decrease in strength (over aging).

As bearing alloys may be used all hot age-hardenable aluminium bearing alloys. These are particularly bearing alloys which contain copper, silicon, magnesium, or zinc as main alloying components either alone or in combination, and which contains as soft phase e.g. tin, lead, bismuth, antimony and possibly also trace admixtures, such for instance chrome, manganese or zirconium.

For the formation of a supersaturated solid solution the bearing alloys are heated by conventional methods to a solution annealing temperature (e.g. 400-550°C) and then are quenched (see Aluminiumtaschenbuch, ed. 14, page 131). Plain bearings are then manufactured from the bimetallic strip according to the conventional methods, and then the bearings are mounted in the respective machine in which hot age-hardening takes place during operation.

How quickly the maximum strength value is achieved during the hot age-hardening depends on the one hand on the composition of the bearing alloy and on the other hand on the material of the component in sliding contact therewith and also on the operational conditions of the machine. The greater the rotational speed at which the machine is run-in, the higher the temperature which speed up the hot age-hardening and thereby the increase of strength.

Embodiments will now be described in greater detail, by way of example, with reference to the Figures.

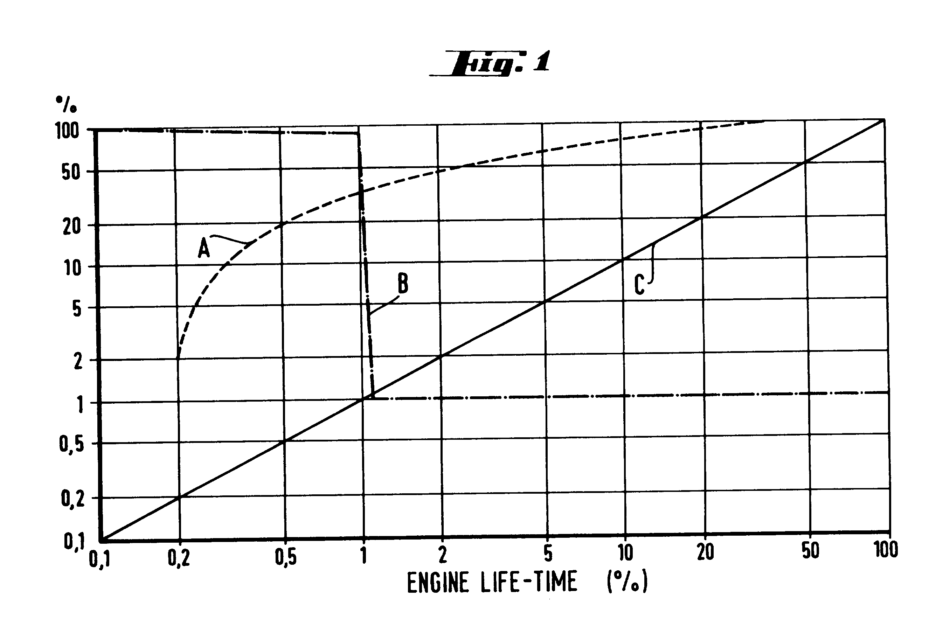

Figure 1 is a diagram illustrating, among others, the relative strength of the bearing layer in dependence on the life of the machine.

Figure 2 is a schematic diagram illustrating the matrix of an aluminium alloy after quenching.

Figure 3 is schematic diagram of an alumninium alloy mounted in an engine before running-in.

Figure 4 is a schematic diagram of an aluminium alloy after running-in.

In Figure is shown the hardness (curve A) of an aluminium bearing alloy in dependence on the life of the machine, to illustrate the characteristic progress of increasing strength when the plain bearing comprising a bearing alloy in the state of a supersaturated solid solution is mounted and hot age-hardening is performed during the operation of the machine. The shape of the curve A shows that, after about 10% of the life of the machine, approximately 90 % of the maximum value of the strength of the machine is obtained. The curve A then approaches the maximum value and remains then up to the end of the life of the machine at this highest level. It is presumed that the life of the machine is shorter than the period after which a curve A again falls. Simultaneously is shown the conformability (curve B) which describes the embeddability of the bearing material. At the end of the running-in phase (approximately 1 % of the life of the machine) this embeddability drastically drops and remains approximately on a value below 1 %. The curve C describes the load carrying capacity.

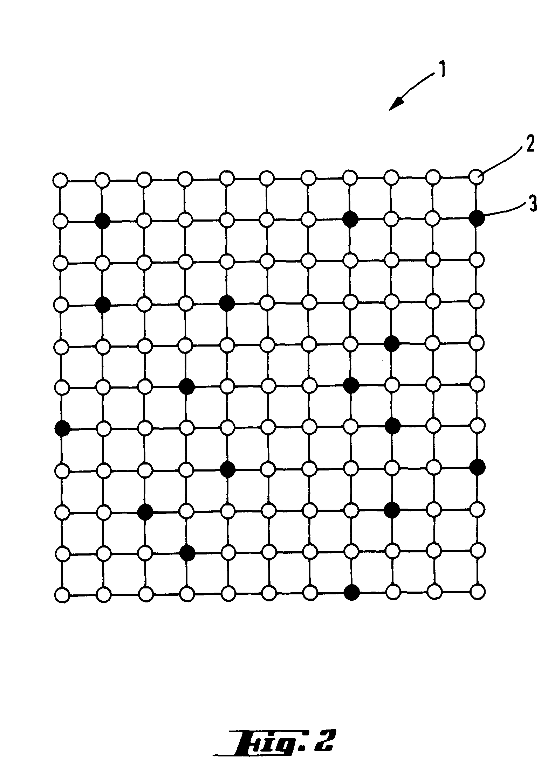

Figure 2 shows the matrix 1 of an aluminium alloy in the form of a supersaturated solid solution performed after quenching the aluminium alloy to room temperature. The structure shown in figure 2 can be measured by a wide-angle X-ray scattering experiment. The lattice shows a regular structure in which the aluminium atoms 1 and the alloying atoms 2, like copper, are positioned at the lattice points.

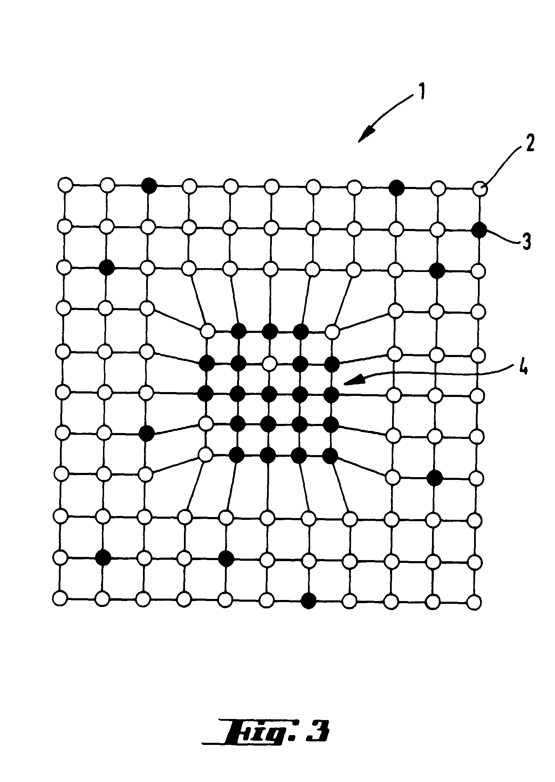

While handling the plain bearing at room temperature until it is mounted in the engine, a precipitation takes place which is coherent with the aluminium matrix. The alloying elements left their lattice points and formed a concentrated area 4 within the lattice (fig. 3).

The alloy being in the state shown in figure 3 has a hardness which is below 10% of the difference between the maximum achievable hardness and the quench value.

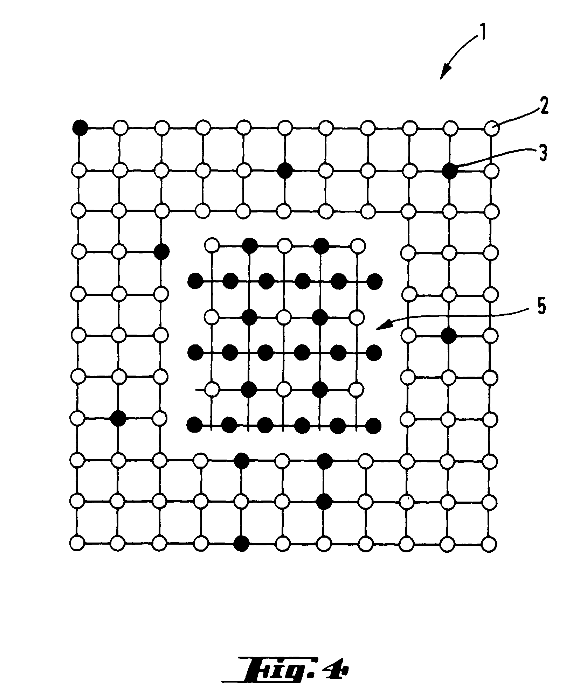

After running-in the precipitation changes and is only partially coherent to the aluminium matrix 1. The area 4 of figure 3 has been transformed to an irregular structure indicated by reference number 5 in figure 4. Within the area 5 intermetallic phases have been built which are responsible for the maximum achievable hardness.

## Claims

1. A finished plain bearing comprising a bearing alloy mounted in a machine, particularly an internal combustion engine, characterized in
that the bearing alloy is in the form of a supersaturated solid solution or is naturally aged and is not age-hardened before mounting in the machine and
that the bearing alloy is age-hardenable during the operation of the machine due to temperatures generated by friction between the plain bearing and the associated component of the machine in sliding contact therewith.

2. A finished plain bearing according to claim 1 characterized in that the hardness of the supersaturated solid solution is below 10% of the difference between the maximum achievable hardness obtained during operation and the quench value, and that the hardness increases in operation continuous until the maximum hardness is obtained.

3. A finished plain bearing according to any of claims 1 to 2, characterized in that the bearing alloy is an aluminium bearing alloy which contains alloying components such as copper, silicon, magnesium or zinc either alcne or in combination, and also soft components such as tin, bismuth, lead or antimony and possibly trace admixtures, such for instance chromium, manganese or zirconium.

4. A method for the age-hardening of bearing alloys of plain bearings characterized in that the plain bearing is mounted in a machine with the bearing alloy being in the form of a supersaturated solid solution or naturally aged, the age-hardening treatment being then performed in the machine during its operation due to the temperatures generated by friction between the plain bearing and the component in sliding contact therewith.

5. A method according to claim 4 characterized in that the heat treatment is performed during the running-in of the machine, so that after running-in of the machine 90 % of the maximum hardness is achieved.

6. A method according to claims 4 or 5 characterized in that the supersaturated solid solution is obtained by rapid solidification from a molten material.

7. A method according to claim 6 characterized in that the rapid solidification is obtained by a direct solidification of the bearing material directly onto a metallic substrate.

## Patentansprüche

1. In eine Maschine, insbesondere Verbrennungsmotor, eingebautes, fertiges Gleitlager mit einer Lagerlegierung,
dadurch gekennzeiclmet,
daß die Lagerlegierung als übersättigter Mischkristall vorliegt oder kalt ausgehärtet ist und vor dem Einbau in die Maschine nicht ausgehärtet ist und die Lagerlegierung im Betrieb der Maschine aufgrund von Temperaturen aushärtbar ist, die durch Reibung zwischen dem Gleitlager und zugeordnetem, in Gleitkontakt befindlichem Gleitpartner der Maschine erzeugt werden.

2. Gleitlager nach Anspruch 1, dadurch gekennzeichnet, daß die Härte des übersättigten Mischkristalls unter 10 % der Differenz zwischen dem Maximalwert der Härte, der im Betrieb erreichbar ist, und dem Wert der Härte liegt, der durch Abschreckung erreicht wird, und
daß die Härte im Betrieb kontinuierlich bis zum Erreichen der Maximalhärte ansteigt.

3. Gleitlager nach einem der Ansprüche 1 oder 2, dadurch gekennzeichnet, daß die Lagerlegierung eine Aluminiumlagerlegierung ist, die Lagerungskomponenten wie Kupfer, Silizium, Magnesium oder Zink einzeln oder in Kombination sowie weiche Komponenten wie Zinn, Wismut, Blei oder Antimon aufweist.

4. Verfahren zum Aushärten von Lagerlegierungen von Gleitlagern, bei denen die Lagerlegierung bei einer vorgegebenen Temperatur über eine vorgegebene Zeit einer Wärmebehandlung unterzogen wird,
dadurch gekennzeichnet,
daß das Gleitlager in eine Maschine eingesetzt wird, wobei die Lagerlegierung als übersättigter Mischkristall vorliegt oder kalt ausgehärtet ist und die Aushärtebehandlung dann während des normalen Betriebs der Maschine mittels Temperaturen durchgeführt wird, die durch Reibung zwischen dem Gleitlager und dem in Gleitkontakt befindlichen Gleitpartner erzeugt werden.

5. Verfahren nach Anspruch 4, dadurch gekennzeichnet, daß die Wärmebehandlung während des Einlaufens der Maschine durchgeführt wird, so daß nach dem Einlaufen der Maschine 90 % der Maximalhärte erreicht werden.

6. Verfahren nach Anspruch 4 oder 5, dadurch gekennzeichnet, daß der übersättigte Mischkristall durch rasche Erstarrung aus der Schmelze erhalten wird.

7. Verfahren nach Anspruch 6, dadurch gekennzeichnet, daß die rasche Erstarrung durch direkte Erstarrung des Gleitlagermaterials unmittelbar auf dem Metallsubstrat erhalten wird.

## Revendications

1. Palier lisse fini comprenant un alliage antifriction monté dans une machine, en particulier un moteur à combustion interne, caractérisé en ce que
l'alliage antifriction se présente sous la forme d'une solution solide sursaturée ou est vieilli naturellement et n'est pas durci par vieillissement avant son montage dans la machine, et en ce que
l'alliage antifriction est durcissable par vieillissement pendant le fonctionnement de la machine en raison des températures engendrées par le frottement entre le palier lisse et le composant associé de la machine en contact glissant avec celui-ci.

2. Palier lisse fini selon la revendication 1,
caractérisé en ce que la dureté de la solution solide sursaturée est inférieure à 10% de la différence entre la dureté maximum qu'il est possible d'atteindre pendant le fonctionnement et la valeur après trempe, et en ce que la dureté augmente en continu pendant le fonctionnement jusqu'à ce que la dureté maximum soit obtenue.

3. Palier lisse fini selon l'une quelconque des revendications 1 ou 2, caractérisé en ce que l'alliage antifriction est un alliage d'aluminium antifriction qui contient des composants d'alliage tels que du cuivre, du silicium, du magnésium ou du zinc, soit seuls, soit en combinaison, ainsi que des composants tendres tels que de l'étain, du bismuth, du plomb ou de l'antimoine et éventuellement des ajouts sous forme de trace, tels que, par exemple du chrome, du manganèse ou du zirconium.

4. Procédé pour le durcissement par vieillissement d'alliages antifriction de paliers lisses, caractérisé en ce que le palier lisse est monté dans une machine, l'alliage antifriction se présentant sous la forme d'une solution solide sursaturée ou étant vieilli naturellement, le traitement de durcissement par vieillissement étant ensuite effectué dans la machine pendant son fonctionnement en raison des températures engendrées par le frottement entre le palier lisse et le composant en contact glissant avec celui-ci.

5. Procédé selon la revendication 4, caractérisé en ce que le traitement thermique est effectué pendant le rodage de la machine, de sorte qu'après rodage de la machine, on obtient 90% de la dureté maximum.

6. Procédé selon les revendications 4 ou 5, caractérisé en ce que la solution solide sursaturée est obtenue par solidification rapide à partir d'un matériau en fusion.

7. Procédé selon la revendication 6, caractérisé en ce que la solidification rapide est obtenue grâce à une solidification directe du matériau antifriction directement sur un substrat métallique.
